# FASCICULE DE BREVET EUROPEEN

(11) **EP 0 947 404 B1**
(45) Date de publication et mention de la délivrance du brevet: **12.03.2003**
(21) Numéro de dépôt: 98440066.3
(22) Date de dépôt: 01.04.1998
(51) Int. Cl.: B60S 3/04, B05B 15/06

(54) **Fourreau de lance de lavage**
Waschdüsenrohrhülse
Washing lance sheath

(43) Date de publication de la demande: 06.10.1999
(73) Titulaire: SOGICO SA, 2028 Vaumarcus (CH)
(72) Inventeur: Villegas, Marc, 69800 Saint Priest (FR)
(74) Mandataire: Littolff, Denis

(56) Documents cités:
- US-A- 2 440 745
- US-A- 4 174 810
- US-A- 4 306 678
- US-A- 4 456 177

## Description

La présente invention se situe dans le domaine des lances de lavage à haute pression, et plus particulièrement celles qui sont disposées à demeure dans le cadre de stations de lavage de véhicules automobiles.

Ces stations sont généralement composées de pistes individualisées comportant chacune une lance permettant à l'utilisateur de nettoyer, en dirigeant le jet haute pression, tout ou partie de son véhicule.

Après utilisation, la lance est posée sur un socle ou placée dans un fourreau jusqu'au prochain emploi, c'est-à-dire jusqu'à redémarrage d'un cycle de lavage. Le coffret de commande permet de sélectionner diverses options, aboutissant cependant toutes à délivrer quasi instantanément un jet à haute pression dès que le lavage est payé, quelle que soit la position ou la situation de la lance.

Or, ledit jet est émis à une pression comprise entre 90 et 110.10⁵ MPa, c'est-à-dire avec une puissance capable de provoquer un déplacement brusque et incontrôlé de la lance si celle-ci n'est pas correctement maintenue ou retenue. En jaillissant de son support, la lance incontrôlée peut évidemment devenir dangereuse. En particulier dans les systèmes à fourreau, dans lesquels la lance repose par simple gravité dans son logement, ouverture généralement pointée vers le bas, sans être retenue par un quelconque système additionnel. Un tel système, s'il existait, serait susceptible de compliquer même légèrement l'opération d'extraction / insertion, et est considéré comme commercialement désavantageux.

Pourtant, il arrive que des utilisateurs distraits enclenchent le cycle de lavage sans avoir préalablement saisi la lance. Cet oubli a déjà été la cause d'accidents, soit corporels, soit provoquant des dommages sur les véhicules touchés (bris de glace, peinture endommagée, ...). Dans tous les cas, un mécanisme de sécurité eût pu éviter l'éjection incontrôlée de la lance, et par suite les dommages occasionnés à l'utilisateur et/ou à son véhicule.

Il est cependant clair qu'un mécanisme manuel, de la responsabilité de l'utilisateur, ne constitue pas une bonne réponse au problème : pour gagner du temps, un tel mécanisme ne serait la plupart du temps probablement pas mis en oeuvre, et il ne contribue en rien à résoudre la question de la distraction de l'utilisateur.

On pourrait sans doute concevoir un mécanisme ou un système qui inhibe le jet tant que la lance est dans son fourreau. Une solution mécanique et/ou électronique à ce problème est bien entendu techniquement possible, mais elle implique certainement un coût supplémentaire non négligeable.

Le document US-A-306 678 décrit un fourreau muni d'un système de sécurité mis en action par le jet à haute pression de la lance qu'il contient et qui vient bloquer celle-ci. Il présente à cet effet de nombreuses pièces constitutives mobiles et notamment un cliquet qui se déplace vers la lame pour assurer la fonction de blocage. Sa complexité relative peut cependant rendre difficile l'opération d'extraction / insertion de la lance dans le fourreau à plus ou moins long terme.

La présente invention pallie les inconvénients précités, en proposant un système simple, permanent, utilisant au surplus l'énergie développée par le jet à haute pression à des fins sécuritaires, c'est-à-dire que la cause même des éventuelles pertes de contrôle les empêche désormais.

L'utilisation du jet à haute pression entraîne en outre que le dispositif de sécurité est automatiquement mais uniquement mis en oeuvre lorsque cela est nécessaire, à savoir exclusivement lorsque la lance est activée.

L'invention s'applique donc à un fourreau de lance de nettoyage parcourue par un jet de fluide à haute pression, comportant un corps tubulaire fixé au sol dans une position inclinée, apte à loger la lance lorsqu'elle n'est pas en activité, comportant une sécurité mécanique passive intégrée au fourreau et consistant en des moyens de blocage de la lance dans le fourreau lorsque cette dernière est activée alors qu'elle est en position de repos dans ledit fourreau.

Le document US-A-4 456 177 décrit un fourreau de lance de lavage qui répond à ces caractéristiques, un bras pivotant dont l'une des extrémités est prévue pour bloquer la lance dans un fourreau étant disposé par rapport à ce dernier de manière à ce que l'extrémité réalisant le blocage soit naturellement entrainée dans sa position de blocage.

Au moment de l'introduction de la lance dans le fourreau, il faut cependant faire pivoter ledit bras en sens inverse pour dégager le trajet d'introduction de la lance, obstrué par ladite extrémité réalisant le blocage.

Les moyens de blocage, de le présente invention permettant de s'affranchir de toute opération autre que la simple introduction de la lance dans son fourreau.

Plus précisément, selon l'invention, lesdits moyens consistent en une fenêtre pratiquée dans la paroi du fourreau orientée vers le haut, de dimensions supérieures à l'embout d'extrémité de la lance qui peut par conséquent s'y loger, et située à une distance de l'extrémité inférieure du fourreau telle que lorsque l'embout arrive à son niveau, le poids de la partie de lance hors du fourreau exerce un moment statique suffisant pour faire basculer la lance vers le sol autour d'un pivot constitué par le rebord de l'embouchure dudit fourreau, ledit embout se logeant alors dans la fenêtre en y bloquant la lance.

La fenêtre objet de l'invention est découpée dans le fourreau à un emplacement qui est par conséquent calculé en fonction des configurations respectives du fourreau et de la lance. En général, leurs longueurs respectives sont à peu près équivalentes, car la lance est enfoncée jusqu'à la garde dans le fourreau pour des raisons de commodité de rangement.

La fenêtre doit être localisée à l'endroit où l'embout de la lance entre en contact avec la paroi du fourreau au moment où commence le basculement indiquant que le moment exercé par la partie de lance déjà extraite est supérieur à celui que provoque la partie encore logée dans le fourreau par rapport au bord externe de l'embouchure.

Chaque configuration particulière du couple lance / fourreau implique un recalcul de l'emplacement de la fenêtre, car les paramètres à prendre en compte, en statique et en dynamique, sont multiples :
- longueurs respectives de la lance et du fourreau ;
- configuration du manche de la lance ;
- configuration de l'embouchure du fourreau ;
- puissance du jet ;
- inclinaison du fourreau ; etc...

Selon l'invention, la fenêtre est en outre munie de moyens de guidage disposés sur la surface extérieure du fourreau et prévus pour guider l'embout de la lance lors de son introduction dans le fourreau, en empêchant qu'il se bloque dans la fenêtre.

En l'absence de ces moyens de guidage, l'embout heurterait à chaque introduction l'arête inférieure de la fenêtre, et l'utilisateur serait probablement conduit à ne pas achever le rangement de la lance.

Selon une configuration préférentielle, lesdits moyens de guidage sont constitués de la pièce résultant de la découpe partielle de la fenêtre, pivotée vers l'extérieur du fourreau autour d'un axe constitué par son arête radiale la plus proche de l'extrémité inférieure du fourreau, de sorte que ladite pièce se trouve sur la trajectoire de l'embout de la lance à l'insertion.

Cette configuration procure un avantage évident en terme de fabrication, puisqu'au lieu de rapporter une pièce externe, fabriquée à part, on réutilise la matière du fourreau lui-même, lequel se trouve reconfiguré de façon un peu différente.

Ceci permet de s'affranchir d'au moins une étape de fabrication, et de réduire corollairement les coûts de production.

De préférence, le chant radial libre de la pièce de guidage est de plus solidarisé au fourreau par une patte de fixation.

Pour simplifier encore la fabrication du fourreau, la fenêtre pratiquée dans la paroi supérieure du fourreau est d'allure rectangulaire, et disposée axialement par rapport au corps du fourreau. Cette forme facilite en outre la conversion de la pièce partiellement découpée en organe de guidage, parce qu'elle est ainsi configurée en gouttière.

Le guidage vise à améliorer le rangement de la lance après usage, de manière à la placer dans sa véritable position de repos. Dans cette position, l'embouchure du fourreau, qui s'évase vers l'extérieur, sert en outre d'appui pour le manche de la lance.

L'invention présentée ci-dessus allie des avantages prépondérants en terme de sécurité à une simplification de mise en oeuvre, de fabrication et d'utilisation qui lui confèrent une valeur inventive considérable.

Cette invention va à présent être décrite plus en détail, notamment en référence aux figures annexées, pour lesquelles :
- la figure 1 est une vue en perspective d'une lance rangée dans son fourreau doté du mécanisme de sécurité selon la présente invention ;
- la figure 2 est une vue en perspective de la lance en position partiellement extraite, et bloquée par ledit mécanisme ;
- la figure 3 montre les deux éléments du couple dissociés ; et
- la figure 4 représente une vue en coupe de la configuration de la figure 2.

Les références employées dans les figures s'appliquent aux mêmes éléments de l'une à l'autre. La configuration représentée constitue un exemple préférentiel, nullement exhaustif, de l'invention.

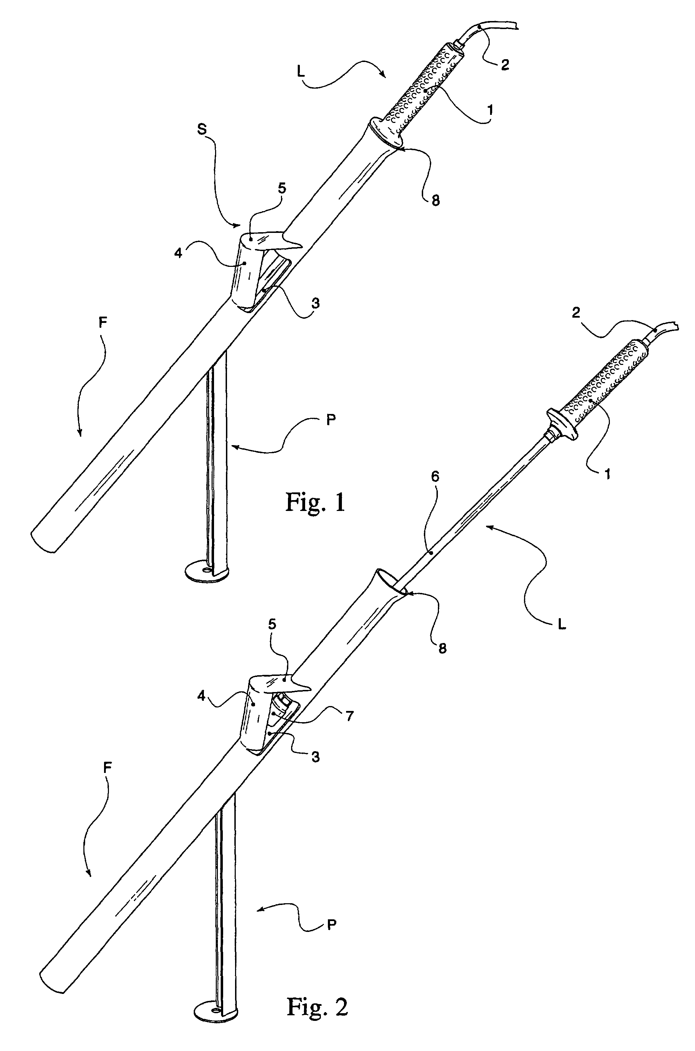

En figure 1, la lance (L) est complètement introduite dans le fourreau (F), lequel est fixé sur un pied (P) doté d'une inclinaison permanente. Seul le manche (1) de la lance (L) est visible, ainsi que le tuyau (2) d'amenée du fluide. Dans cette position, le système de sécurité portant la référence générale (S) est inactif.

Ce système se compose essentiellement d'une fenêtre (3) découpée dans la paroi du fourreau (F) orientée vers le haut. Additionnellement, la fenêtre (3) est recouverte d'une pièce (4) qui résulte de la découpe partielle de ladite fenêtre (3), et d'une pièce de fixation (5) reliant le chant libre de cette pièce (4) à la paroi supérieure du fourreau (F).

Ces pièces jouent un rôle moins important dans la fonction sécuritaire que dans la fonction auxiliaire de guidage qui sera expliquée plus en détail dans la suite.

En figure 2, la lance (L) est partiellement extraite du fourreau (F), rendant apparent le conduit (6) véhiculant le fluide sous pression, constituant la partie essentielle de la lance (L) proprement dite.

Dans cette position, le poids de la partie extraite est suffisant pour permettre un basculement au niveau de l'embouchure (8) du fourreau (F), conduisant à excentrer l'embout (7) situé à l'extrémité de la lance (L), qui se loge par conséquent dans la fenêtre (3) et devient visible.

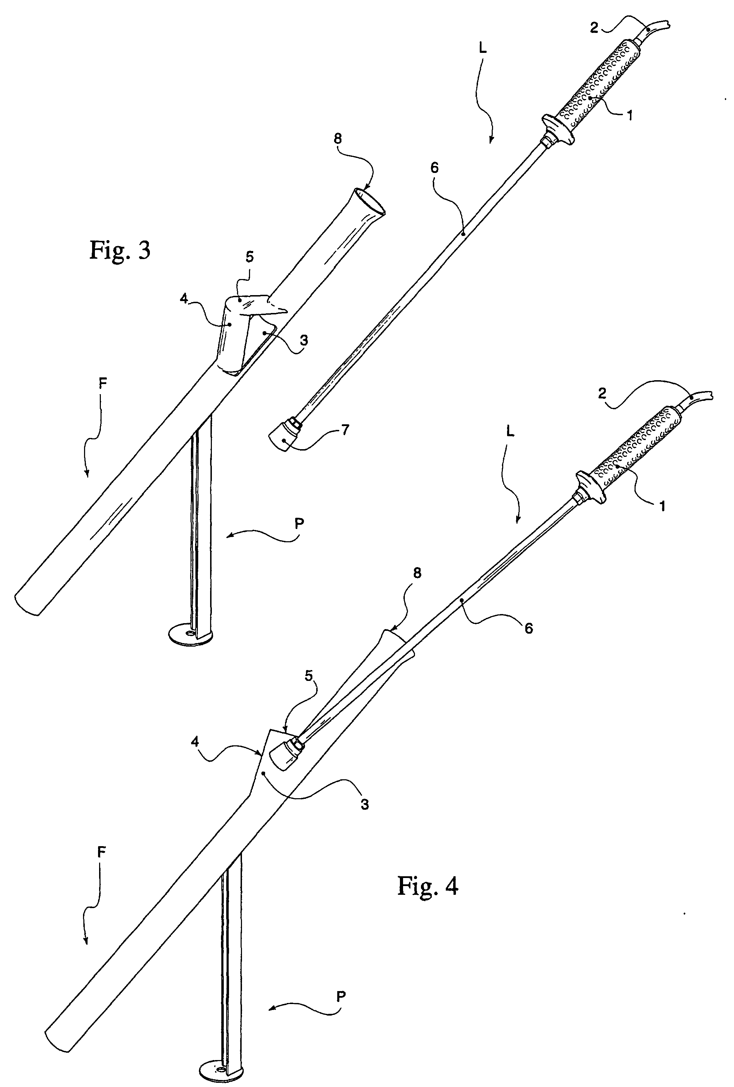

Les positions relatives lance (L) / fourreau (F) apparaissent plus clairement dans la figure 4, alors que les configurations précises de chaque élément du couple lance (L) / fourreau (F) sont clairement montrées en figure 3.

En référence à l'ensemble des figures, le fonctionnement est le suivant :

Lorsque la lance (L) est totalement introduite dans le fourreau (F) comme en figure 1 et que l'utilisateur enclenche le processus de nettoyage sans l'en avoir extraite, la force de réaction repousse ladite lance (L) approximativement axialement vers l'embouchure (8) du fourreau (F).

Toutefois, au lieu que le mouvement amorcé se continue jusqu'à extraction complète, donnant ensuite lieu à un trajet incontrôlé de la lance (L) en fonction des surfaces rencontrées par le jet sous pression, générant des efforts de réactions correspondants, le système de sécurité agit en bloquant la lance (L).

Lors de l'extraction, dès lors que la partie déjà extraite exerce un moment suffisant pour faire basculer la lance vers le sol, l'embout (7) est entraîné vers la paroi supérieure du fourreau (F), en direction de la fenêtre (3), dans laquelle il se loge.

Le blocage est alors immédiat, puisque la fenêtre (3) est axiale et qu'elle présente un chant radial s'opposant à la sortie de l'embout (7), chant contre lequel la réaction provoquée par le jet appliqué contre la pièce (4) repousse l'embout (7).

Dès que l'utilisateur se saisit du manche (1), il peut remettre la lance (L) dans la direction de l'axe du fourreau (F) et extraire sans difficultés ladite lance (L).

A l'inverse, lors de l'insertion, l'embout (7) ne se coince pas dans la fenêtre (3), car la pièce (4) le guide vers une orientation axiale dans laquelle l'introduction est naturelle.

La pièce (5) est notamment utile pour pérenniser la position de la pièce (4), afin qu'elle puisse jouer le plus efficacement possible son rôle de guidage. En fin d'introduction, comme en figure 1, le manche (1) est en appui contre l'embouchure (8) du fourreau.

L'extrémité inférieure du fourreau (F) est ouverte, ce qui diminue la réaction qui s'exerce sur la lance en cas de démarrage incontrôlé du jet, mais pas suffisamment compte tenu de la haute pression délivrée par ces lances (L).

L'invention ne se limite pas à l'exemple ni à la configuration précités, mais elle englobe les variantes qui peuvent être mises en oeuvre par l'homme de l'art, et qui sont dans le domaine des revendications en annexe.

## Revendications

1. Fourreau (F) de lance (L) de nettoyage parcourue par un jet de fluide à haute pression, comportant un corps tubulaire fixé au sol dans une position inclinée, apte à loger la lance (L) lorsqu'elle n'est pas en activité, comportant une sécurité mécanique passive intégrée au fourreau, consistant en des moyens de blocage (3) de la lance (L) dans le fourreau (F) lorsque cette dernière est activée alors qu'elle est en position de repos dans ledit fourreau (F), **caractérisé en ce que** lesdits moyens consistent en une fenêtre (3) pratiquée dans la paroi du fourreau (F) orientée vers le haut, de dimensions supérieures à l'embout (7) d'extrémité de la lance (L) qui peut par conséquent s'y loger, et située à une distance de l'extrémité inférieure du fourreau (F) telle que lorsque l'embout (7) arrive à son niveau, le poids de la partie de lance (L) hors du fourreau (F) exerce un moment statique suffisant pour faire basculer la lance (L) vers le sol autour d'un pivot constitué par le rebord de l'embouchure (8) dudit fourreau, ledit embout (7) se logeant alors dans la fenêtre (3) et s'y bloquant.

2. Fourreau (F) de lance (L) de nettoyage selon la revendication précédente, **caractérisé en ce que** la fenêtre (3) est munie de moyens de guidage (4, 5) disposés sur la surface extérieure du fourreau (F) et prévus pour guider l'embout (7) de la lance lors de son introduction en empêchant qu'il se bloque dans la fenêtre (3).

3. Fourreau (F) de lance (L) de nettoyage selon la revendication précédente, **caractérisé en ce que** lesdits moyens de guidage (4, 5) sont constitués de la pièce (4) résultant de la découpe partielle de la fenêtre (3), pivotée vers l'extérieur du fourreau (F) autour d'un axe constitué par son arête radiale la plus proche de l'extrémité inférieure du fourreau (F), de sorte que ladite pièce (4) se trouve sur la trajectoire de l'embout (7) de la lance (L) à l'introduction.

4. Fourreau (F) de lance (L) de nettoyage selon la revendication précédente, **caractérisé en ce que** le chant radial libre de la pièce (4) de guidage est solidarisée au fourreau (F) par une patte de fixation (5).

5. Fourreau (F) de lance (L) de nettoyage selon l'une quelconque des revendications précédentes, **caractérisé en ce que** la fenêtre (3) pratiquée dans la paroi supérieure du fourreau (F) est d'allure rectangulaire, et disposée axialement par rapport au corps du fourreau (F).

6. Fourreau (F) de lance (L) de nettoyage selon l'une quelconque des revendications précédentes, **caractérisé en ce que** l'embouchure (8) du fourreau (F) s'évase vers l'extérieur et sert d'appui pour le manche (1) de la lance (L).

## Claims

1. Sheath (F) for a cleaning nozzle (L) through which a jet of high-pressure fluid passes, comprising a tubular body which is secured to the ground in an inclined position and can accommodate the nozzle (L) when it is not active, comprising a passive mechanical safety device which is integrated in the sheath, consisting of means (3) for locking the nozzle (L) in the sheath (F) when the sheath is activated whilst it is in the position of rest in the said sheath (F), **characterised in that** the said means consist of a window (3) which is provided in the wall of the sheath (F) and is oriented upwards, with dimensions larger than the end tip (7) of the nozzle (L) which can consequently be accommodated in the window, and is situated at a distance from the lower end of the sheath (F) such that when the tip (7) reaches this level, the weight of the part of the nozzle (L) which is outside the sheath (F) exerts static moment which is sufficient to tilt the nozzle (L) towards the ground around a pivot constituted by the edge of the mouth (8) of the said sheath, the said tip (7) then being accommodated in the window (3) and being locked in the latter.

2. Sheath (F) for a cleaning nozzle (L) according to the preceding claim, **characterised in that** the window (3) is provided with means (4,5) for guiding which are disposed on the outer surface of the sheath (F) and are provided in order to guide the tip (7) of the nozzle whilst the latter is being introduced and prevent it from being locked in the window (3).

3. Sheath (F) for a cleaning nozzle (L) according to the preceding claim, **characterised in that** the said means (4,5) for guiding consist of the part (4) obtained from the partial cut-out of the window (3) which is pivoted towards the exterior of the sheath (F) around an axis which consists of its radial ridge which is closest to the lower end of the sheath (F), such that the said part (4) is on the path of the tip (7) of the nozzle (L) when the latter is introduced.

4. Sheath (F) for a cleaning nozzle (L) according to the preceding claim, **characterised in that** the free radial edge of the guiding part (4) is rendered integral with the sheath (F) by means of a securing lug (5).

5. Sheath (F) for a cleaning nozzle (L) according to any one of the preceding claims, **characterised in that** the window (3) provided in the upper wall of the sheath (F) has a rectangular shape, and is disposed axially relative to the body of the sheath (F).

6. Sheath (F) for a cleaning nozzle (L) according to any one of the preceding claims, **characterised in that** the mouth (8) of the sheath (F) widens towards the exterior and acts as a support for the handle (1) of the nozzle (L).

## Patentansprüche

1. Futteral (F) für Reinigungssprührohr (L), das von einem Hochdruck-Fluidstrahl durchströmt wird, mit einem röhrenförmigen Körper, der am Boden in einer geneigten Stellung befestigt ist und das Sprührohr (L) aufnehmen kann, wenn es nicht aktiv ist, wobei das Futteral eine in das Futteral integrierte passive mechanische Sicherheitseinrichtung aufweist, die aus Mitteln (3) besteht, die das Sprührohr (L) in dem Futteral (F) blockiert, wenn das Sprührohr aktiviert wird, während es sich in der Ruheposition im Futteral (F) befindet,
**dadurch gekennzeichnet,**
**daß** die Mittel aus einem Fenster (3) bestehen, das in der nach oben orientierten Wand des Futterals (F) ausgebildet ist und dessen Abmessungen größer als jene des Abschlußstücks (7) des Sprührohrs sind, das folglich darin aufgenommen werden kann, und das sich in einem Abstand vom unteren Ende des Futterals (F) befindet, derart, daß das Gewicht des außerhalb des Futterals (F) befindlichen Teils des Sprührohrs (L) dann, wenn das Abschlußstück (7) die Höhe des Fensters erreicht, ein statisches Moment ausübt, das ausreicht, um das Sprührohr (L) um einen durch den Rand der Mündung (8) des Futterals gebildeten Drehpunkt zum Boden zu kippen, wobei sich das Abschlußstück (7) dann in dem Fenster (3) befindet und hier blockiert ist.

2. Futteral (F) für Reinigungssprührohr (L) nach dem vorhergehenden Anspruch,
**dadurch gekennzeichnet,**
**daß** das Fenster (3) mit Führungsmitteln (4, 5) versehen ist, die auf der äußeren Oberfläche des Futterals (F) angeordnet und dazu vorgesehen sind, das Abschlußstück (7) des Sprührohrs bei seiner Einführung zu führen, indem sie verhindern, daß es im Fenster (3) blockiert wird.

3. Futteral (F) für Reinigungssprührohr (L) nach dem vorhergehenden Anspruch,
**dadurch gekennzeichnet,**
**daß** die Führungsmittel (4, 5) aus dem Teil (4) gebildet sind, der sich durch den Teilausschnitt des Fensters (3) ergibt, der um eine Achse, die durch die radiale Kante des Ausschnitts gebildet ist, die sich am nähesten beim unteren Ende des Futterals (F) befindet, in die äußere Umgebung des Futterals (F) gebogen ist, derart, daß sich der Teil (4) bei der Einführung des Abschlußstücks (7) des Sprührohrs (L) in dessen Bahn befindet.

4. Futteral (F) für Reinigungssprührohr (L) nach dem vorhergehenden Anspruch,
**dadurch gekennzeichnet,**
**daß** die freie radiale Kante des Führungsteils (4) an dem Futteral (F) mit einem Befestigungsansatz (5) befestigt ist.

5. Futteral (F) für Reinigungssprührohr (L) nach einem der vorhergehenden Ansprüche,
**dadurch gekennzeichnet,**
**daß** das in der oberen Wand des Futterals (F) ausgebildete Fenster (3) rechtwinklig verläuft und in bezug auf den Körper des Futterals (F) axial angeordnet ist.

6. Futteral (F) für Reinigungssprührohr (L) nach einem der vorhergehenden Ansprüche,
**dadurch gekennzeichnet,**
**daß** sich die Mündung (8) des Futterals (F) nach außen erweitert und als Abstützung für den Griff (1) des Sprührohrs (L) dient.
